# EUROPÄISCHE PATENTANMELDUNG

(11) **EP 0 568 986 A1**
(43) Veröffentlichungstag der Anmeldung: **10.11.1993**
(21) Anmeldenummer: 93107250.8
(22) Anmeldetag: 05.05.1993
(51) Int. Cl.: A01D 43/10

(54) **Mähmaschine**

(30) Priorität: 06.05.1992 DE 4214414
(71) Anmelder: Alois Pöttinger Maschinenfabrik GmbH, A-4710 Grieskirchen (AT)
(72) Erfinder: Lehner, Josef, Dipl.-Ing., A-4732 St. Thomas (AT)
(74) Vertreter: Dupal, Helmut, Dipl-Ing.

(57) **Zusammenfassung**

Mähmaschine mit einem ein Rotationsmähwerk tragenden, quer zur Fahrtrichtung (6) ausgerichteten Maschinenrahmen (1), der mit einer Tragkonsole (5) für die Schwenkachse (7) einer Zugdeichsel (8) und das Zentralgetriebe (9) der Maschine, sowie mit zwei Stützkonsolen (3,3') versehen ist.

An den Stützkonsolen (3,31) ist das Laufwerk der Maschine gelagert und zwischen ihnen kann ein Zusatzgerät (16) für die Nachbearbeitung des Mähwerkes lösbar und einstellbar angebracht werden, wobei der Antrieb des Rotationsmähwerkes und des Zusatzgerätes (16) über Zwischengetriebe (14,15) erfolgt, die über Doppelgelenkwellen (17,17') vom Zentralgetriebe (9) angetrieben sind und wobei wenigstens der Antriebsstrang des Zusatzgerätes leicht lösbar ist.

## Beschreibung

Die Erfindung betrifft eine Mähmaschine mit den Merkmalen des Oberbegriffes des Anspruches 1.

Maschinen dieser Art sind an einer langen Zugdeichsel geführt, die es gestattet, die Maschine seitlich rechts oder links oder hinter einer Zugmaschine zu fahren. Dabei treten Schwierigkeiten hinsichtlich der Art der Deichsellagerung, sowie der Ausführung des Antriebes der Mähmaschine und besonders wenn diese noch mit einem Zusatzgerät versehen ist auf, die bisher mit verhältnismäßig aufwendigen Anordnungen gelöst wurden, um freie Verschwenkbarkeit der Deichsel und zulässige Abwinkelung der Antriebswelle sicher zustellen.

Ausgehend von einer gezogenen Mähmaschine, bei der der Maschinenrahmen gleichzeitig als Tragrahmen für Fahrwerk, Deichsel, Antrieb und Zusatzgerät dienen kann, besteht die Aufgabe der Erfindung darin eine einfache Lösung für den Antriebsstrang mit wenig an Teilen zu finden, bei der die Anordnung der Zugdeichsel keinen nennenswerten Einfluß auf die Gestaltung des Antriebsstranges selbst hat und bei der die Einbindung eines Zusatzgerätes ohne großen Aufwand geschehen kann und dieses einfach auswechselbar konzipiert werden kann.

Diese Aufgabe wird bei einer Maschine der Eingangs erwähnten Gattung mit den Merkmalen des kennzeichnenden Teiles des Anspruches 1 gelöst.

Die Unteransprüche, die ebenso wie Anspruch 1 einen Teil der Beschreibung der Anmeldung bilden, betreffen besonders vorteilhafte Ausgestaltungen der Erfindung.

Durch die Anordnung von Schwenkachse und Zentralgetriebe auf einer Konsole, beabstandet voneinander, mit dem Getriebe hinten, ist es möglich die Zugdeichsel in einem weiten Winkel in beide Richtungen zu verschwenken und die Zwischengetriebe mit einfachen, bewährten Mitteln anzutreiben und ihre Antriebsverbindung leicht lösbar zu gestalten.

Weiters ist es möglich, unterschiedliche Zusatzgeräte anzubauen und ohne besondere Anpassungsmaßnahmen anzutreiben, weil diese ihr eigenes Zwischengetriebe aufgebaut haben.

Die Anwendung von Riemengetrieben für die Zwischengetriebe ermöglicht eine besonders einfache Antriebsgestaltung, weil die Abtriebswellen gleichzeitig Antriebswellen der jeweiligen Maschinengetriebe bilden können; weiters weil selbst eine Änderung der Übersetzung durch eine andere Riemenradübersetzung verhältnismäßig einfach hergestellt werden kann.

Die Anbringung dieser Zwischengetriebe seitlich außen, ermöglicht die Verwendung von Gelenkwellen bei geringen Abwinkelungen, wodurch Fluchtungsprobleme und der Aufbau besonders aufwendiger Antriebsstränge vermieden werden kann.

Die Verwendung einer Doppelgelenkwelle für die Verbindung der Antriebswelle der Deichsel und des Zentralgetriebes ist sehr einfach zu gestalten, wenn bestimmte Abmessungen eingehalten werden.

Es ist auch möglich für diese Antriebsverbindung ein Riemengetriebe anzuwenden, doch muß dann für das Riemenrad die Antriebswelle des Zentralgetriebes nach oben herausgeführt werden und der Antriebsriemen liegt an der Oberseite des Maschinenrahmens und muß aufwendig abgedeckt werden.

Für die Anwendung von zwei Teilzusatzgeräten hinter der Mähmaschine, z.B. zwei Konditioniereinrichtungen, ist es möglich, den Antriebsstrang vom Zentralgetriebe nach hinten zu verlegen und zwischen den beiden Teilzusatzgeräten anzutreiben.

Für die Verbesserung der Anwendung des Zusatzgerätes ist es vorteilhaft, wenn An- und Abbau rasch und einfach erfolgen kann und überdies die Anpassung an den Maschinenrahmen durch eine einfache Verstellmöglichkeit geschaffen ist.

Die Erfindung ist nachstehend an Hand der Zeichnung eines Ausführungsbeispieles beschrieben.

Es zeigt:

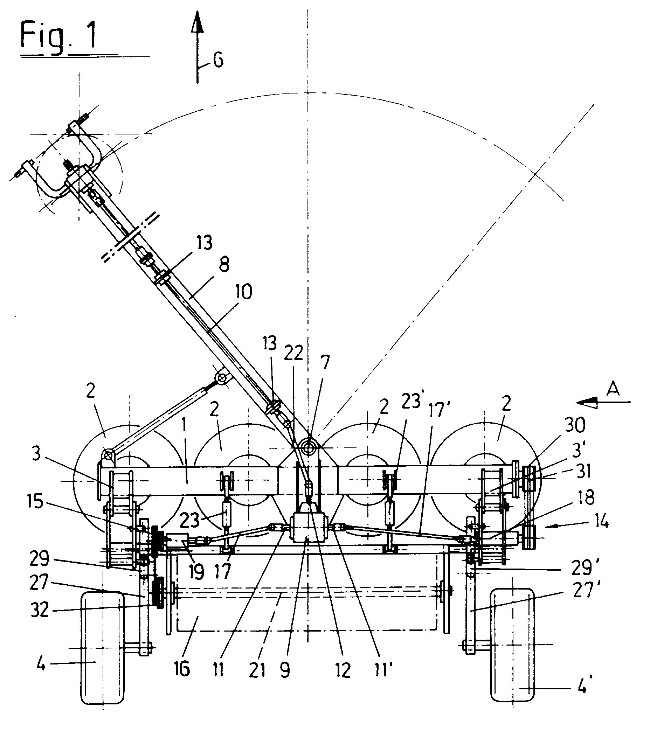

- Fig. 1: eine Draufsicht auf eine Mähmaschine mit vier Mähtrommeln,

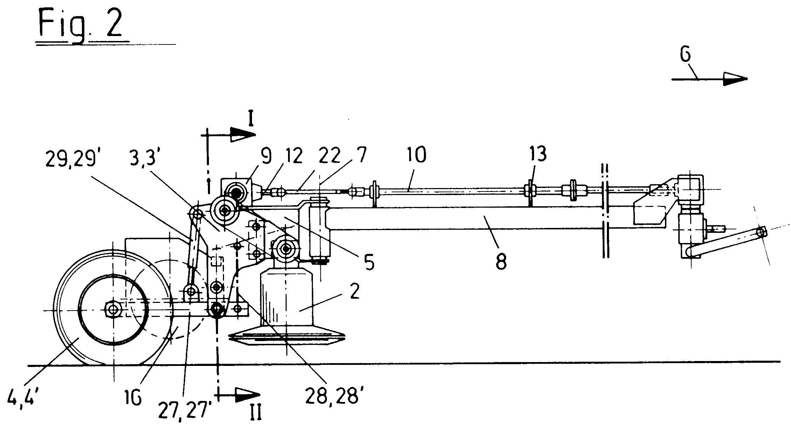

- Fig. 2: eine seitliche Ansicht der Mähmaschine nach Fig. 1

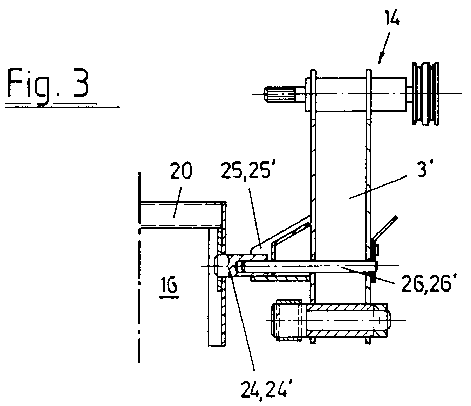

- Fig. 3: einen Schnitt nach I-II der Darstellung in Fig. 2

Die dargestellte Mähmaschine trägt an einem quer zur Fahrtrichtung 6 ausgerichteten Maschinenrahmen 1 mehrere im Abstand voneinander angeordnete, paarweise zusammenlaufend angetriebene Mähtrommeln 2 eines Rotationsmähwerkes.

Auf dem Maschinenrahmen 1 ist in seiner Mitte eine Tragkonsole 5 und an seinen beiden Seiten sind Stützkonsolen 3,3' für das Fahrwerk befestigt.

Die mittlere Tragkonsole 5 ragt über den Maschinenrahmen 1 beiderseits, nach vorn und nach hinten hinaus und trägt vorne eine aufrecht, im wesentlichen lotrechte Schwenkachse 7, an der eine Zugdeichsel 8 für die Anhängung an ein Zugfahrzeug über einen weiten Schwenkbereich verschwenkbar gelagert ist, so daß die Mähmaschine hinten, rechts oder links vom Zugfahrzeug gefahren werden kann.

Auf die Tragkonsole 5 ist der Höhe nach über dem Maschinenrahmen 1 ein Zentralgetriebe 9 angeschraubt, daß mit einem nach vorn gerichteten Antriebswellenanschluß 12 und mit je einem Abtriebswellenanschluß links 11 und rechts 11' ausgestattet ist.

An der Zugdeichsel 8 ist eine Antriebswelle 10 entlang geführt und auf diese mit Lagerungen 13 gelagert, mit der das Zentralgetriebe angetrieben wird.

Dabei sind die Enden der Antriebswelle 10 und des Antriebswellenanschlusses 12 des Zentralgetriebes 9 deren Abstand von der Schwenkachse 7 der Zugdeichsel 8 etwa gleichgroß ist, mit einer Doppelgelenkwelle 22 verbunden, die dadurch eine gleichmäßige Abwinkelung über den gesamten Schwenkbereich erhält.

An den beiden Stützkonsolen 3,3' sind die Radträger 27,27' der beiden Laufräder 4,4' höhenverschwenkbar gelagert und tragen die Federung 28,28' und die Höhenverstellmittel 29,29'.

Auf einer der Stützkonsolen 3 oder 3' ist die Eingangswelle 18 eines Zwischengetriebes 14 für die Mähmaschine gelagert, deren Wellenende mit dem rechten Abtriebswellenanschluß 11' über eine Doppelgelenkwelle 17' verbunden ist.

Das Zwischengetriebe 14 ist als Riemengetriebe ausgeführt, wobei das Abtriebsriemenrad 30 mit der aus dem Maschinenrahmen herausgeführten Welle 31 des Rotationsmähwerkes verdrehfest verbunden ist.

Zum Anbringen eines Zusatzgerätes 16, z.B. in Form eines Aufbereiters, sind an den Stützkonsolen 3,3' nach innen weisende Taschen 25,25' angebracht, in der Lagerzapfen 24,24' eingelegt werden, die am Rahmen 20 des Zusatzgerätes 16 befestigt sind und in den Taschen mit je einem Sicherungsbolzen 26,26', der in den Lagerzapfen eingeschoben wird, gesichert sind.

Die Lage des Rahmens 20 des Zusatzgerätes 16, wird mit zwei längenveränderbaren Streben 23,23' eingestellt, die am Rahmen 20 und am Maschinenrahmen 1 angelenkt sind.

Am Rahmen 20 des Zusatzgerätes 16 ist ein Zwischengetriebe 15 angebracht, das als Riemengetriebe ausgebildet ist und dessen Eingangswelle 19 am Rahmen 20 gelagert ist, während das Abtriebsrahmenrad 32 auf der Hauptantriebswelle 21 des Zusatzgerätes 16 verdrehfest befestigt ist.

Das Ende der Eingangswelle 19 und der linke Abtriebswellenanschluß 11 des Zentralgetriebes 9 sind über eine abnehmbare Doppelgelenkwelle 17 verbunden, wobei durch die Lösbarkeit des Antriebsstranges und der Befestigungsmittel die rasche Austauschbarkeit des Zusatzgerätes 16 möglich ist.

### Legende :

- 1: Maschinenrahmen
- 2: Mähtrommel
- 3,3': Stützkonsole des Fahrwerks
- 4,4': Laufräder des Fahrwerks
- 5: Tragkonsole
- 6: Fahrtrichtung
- 7: aufrechte Schwenkachse der Zugdeichsel 8
- 8: Zugdeichsel
- 9: Zentralgetriebe
- 10: Antriebswelle des Zentralgetriebes
- 11,11': linker und rechter Abtriebswellenanschluß des Zentralgetriebes 9
- 12: Antriebswellenanschluß
- 13: Lagerungen der Antriebswelle an der Zugdeichsel
- 14: Zwischengetriebe der Mähmaschine
- 15: Zwischengetriebe des Zusatzgerätes 16
- 16: Zusatzgerät der Mähmaschine
- 17,17': Doppelgelenkwelle des Zwischengetriebes 14 und des Zwischengetriebes 15
- 18: Eingangswelle des Zwischengetriebes 14 für die Mähmaschine
- 19: Eingangswelle des Zwischengetriebes 15 für das Zusatzgerät 16
- 20: Rahmen des Zusatzgerätes 16
- 21: Hauptantriebswelle des Zusatzgerätes 16
- 22: Doppelgelenkwelle zwischen Antriebswelle 10 und Antriebswellenanschluß 12 des Zentralgetriebes 9
- 23,23': längenverstellbare Streben zwischen Rahmen 20 des Zusatzgerätes 16 und Maschinenrahmen 1
- 24,24': Lagerzapfen des Rahmens 10
- 25,25': Taschen für die Aufnahme der Lagerzapfen 24,24'
- 26,26': Sicherungsbolzen für die Lagerzapfen 24,24'
- 27,27': Radträger
- 28,28': Federung
- 29,29': Höhenverstellmittel
- 30: Abtriebsriemenrad des Zwischengetriebes 14
- 31: Welle des Rotationsmähwerkes
- 32: Abtriebsriemenrad des Zwischengetriebes 14
- 33:

## Patentansprüche

1. Mähmaschine mit einem quer zur Fahrtrichtung ausgerichteten Maschinenrahmen, an dem beiderseits nach hinten gerichtete Stützkonsolen für die Aufhängung zweier Laufräder befestigt sind und an dem im mittleren Bereich eine Tragkonsole für die Anlenkung einer um eine aufrechte Schwenkachse verschwenkbare Zugdeichsel, für die Anhängung an ein Zugfahrzeug und für die Befestigung eines Zentralgetriebes angebracht ist, wobei an der Zugdeichsel die Antriebswelle des Zentralgetriebes entlang geführt und gelagert ist, dadurch gekennzeichnet, daß die Schwenkachse (7) der Zugdeichsel (8) bezüglich der Fahrtrichtung (6) vor dem Maschinenrahmen (1) und das Zentralgetriebe (9) hinter diesem und der Höhe nach, wenigstes teilweise oberhalb von diesem angeordnet ist.

2. Mähmaschine nach dem vorhandenen Anspruch, dadurch gekennzeichnet, daß das Zentralgetriebe (9) links und rechts einen Abtriebswellenanschluß (11,11') aufweist, die beide über Doppelgelenkwellen (17,17') mit je einem Zwischengetriebe (14 und 15) gekoppelt sind, von denen eines für den Antrieb der Mähmaschine und das Andere für den Antrieb eines Zusatzgerätes (16), vorzugsweise eines Mähgutaufbereiters, vorgesehen ist und die in Bezug auf den Maschinenrahmen (1) beiderseits seitlich angeordnet sind.

3. Mähmaschine nach dem vorhergehenden Anspruch, dadurch gekennzeichnet, daß wenigstens ein Zwischengetriebe (14) für die Mähmaschine mit der Eingangswelle (18) auf der Stützkonsole (3 oder 3') des einen Laufrades (4 oder 4') gelagert ist und mit dem Abtriebsbereich an den oder in dem Maschinenrahmen (1) des Mähwerks an- oder eingebaut ist und vorzugsweise als Riemengetriebe ausgeführt ist.

4. Mähmaschine nach Anspruch 2, dadurch gekennzeichnet, daß wenigstens ein Zwischengetriebe (15) für das Zusatzgerät (16) zusammen mit seiner Eingangswelle (19) auf dem Rahmen (20) des Zusatzgerätes (16) gelagert ist und vorzugsweise aus einem Riemengetriebe besteht, dessen Abtriebswelle die Hauptantriebswelle (21) des Zusatzgerätes (16) bildet.

5. Mähmaschine nach einem der Ansprüche 2 bis 4, dadurch gekennzeichnet, daß die Antriebsverbindung zwischen dem Zentralgetriebe (9) und den Zwischengetrieben (14,15) von je einer abnehmbaren Doppelgelenkwelle (17,17') hergestellt wird.

6. Mähmaschine nach einem der vorhergehenden Ansprüche, dadurch gekennzeichnet, daß die Antriebsverbindung zwischen der Antriebswelle (10) für das Zentralgetriebe (9) und dessen in Fahrtrichtung (6) weisender Antriebswellenanschluß (12) mit einer Doppelgelenkwelle (22) hergestellt wird, wobei die Wellenenden der Antriebswelle (10) und des Antriebswellenanschlusses (12) wenigstens nahezu gleichen Abstand von der aufrechten Schwenkachse (7) der Zugdeichsel (8) haben.

7. Mähmaschine nach einem der Ansprüche 1 bis 5, dadurch gekennzeichnet, daß die Antriebsverbindung zwischen der Antriebswelle (10) für das Zentralgetriebe (9) und diesem von einem Riemengetriebe gebildet ist.

8. Mähmaschine nach einem der vorhergehenden Ansprüche, dadurch gekennzeichnet, daß das Zentralgetriebe (9) ein nach hinten gerichtetes Abtriebswellenende aufweist, das für den Antrieb eines Zusatzgerätes mit mittigem Zwischengetriebe vorgesehen ist, das zwei seitliche links und rechts angeordnete Teile des Zusatzgerätes antreibt.

9. Mähmaschine nach einem der vorhergehenden Ansprüche, dadurch gekennzeichnet, daß das Zusatzgerät (16) in einem Rahmen (20) eingebaut ist, der an den beiden Stützkonsolen (3,3') der Laufräder (4,4') lösbar gelagert und festlegbar ist und in seiner Lage zwischen Maschinenrahmen (1) mittels längenverstellbaren Streben (23,23') einstellbar ist.

10. Mähmaschine nach einem der vorhergehenden Ansprüche, dadurch gekennzeichnet, daß der Rahmen (20) des Zusatzgerätes (16) beiderseits mit Lagerzapfen (24,24') versehen ist, die in Taschen (25,25') an den beiden Stützkonsolen (3,3') eingelegt und vorzugsweise mittels Sicherungsbolzen (26,26') sicherbar sind.
